# EUROPEAN PATENT SPECIFICATION

(11) **EP 3 502 924 B1**
(45) Date of publication and mention of the grant of the patent: **21.10.2020**
(21) Application number: 16805476.5
(22) Date of filing: 18.08.2016
(51) Int. Cl.: G06F 16/783

(54) **PROCESS FOR GENERATING A DATABASE LINKED TO AN AUDIOVISUAL CONTENT THROUGH DIFFERENT TIME REFERENCES**
VERFAHREN ZUR ERZEUGUNG EINER DATENBANK MIT VERLINKTEN DATEN ZU VERSCHIEDENEN ZEITVERWEISEN AUF AUDIOVISUELLEN INHALT
PROCÉDÉ DE GÉNÉRATION D'UNE BASE DE DONNÉES RELIÉES AVEC DIFFÉRENTES RÉFÉRENCES TEMPORELLES À UN CONTENU AUDIOVISUEL

(43) Date of publication of application: 26.06.2019
(73) Proprietor: Tagsonomy, S.L., 33192 Llanera (Asturias) (ES)
(72) Inventor: GARCÍA ESTRELLA, Luis, 28014 Madrid (ES); FIERRO IGLESIAS, Pedro, 28014 Madrid (ES); RAMEAU RODRÍGUEZ, Miguel, 28014 Madrid (ES); BLANCO PÉREZ, Beatriz, 28014 Madrid (ES); JULIANA MEDIO, Julio Enrique, 28014 Madrid (ES); SÁNCHEZ LÓPEZ, Sergio, 28014 Madrid (ES); CASTRO MIGUEL, Jonathan, 28014 Madrid (ES); MARIÑO RUIZ, Daniel, 28014 Madrid (ES)
(74) Representative: Monzón de la Flor, Luis Miguel
(86) International application number: PCT/ES2016/070605
(87) International publication number: WO 2018/033652

(56) References cited:
- US-A1- 2002 108 112
- US-A1- 2007 250 901
- US-A1- 2011 113 444
- US-A1- 2013 276 008

## Description

### OBJECT OF THE INVENTION

As the title of the invention specifies, the object of the present invention is a process for generating a database linked to an audiovisual content through different time references, such that it is possible to assign metadata to said audiovisual content; i.e. it relates to a process that generates, in a semi-automatic manner, a number of data or enriched information, and automatically links them to an audiovisual content through different time references.

Therefore, the database contains a number of enriched data connected to a precise time reference of the audiovisual content.

The present invention is characterised by the characteristics of each of the actions performed during each step of the database generation process, such that, as a whole, a process is achieved which assigns, in a semi-automatic manner, enriched recorded data that are precisely connected to a time reference.

Therefore, the present invention is framed within the field of audiovisual contents and additional information. The invention is defined by the features of the independent claims. Further embodiments are the subject-matter of the dependent claims.

### BACKGROUND OF THE INVENTION

Currently, when it is desired to link information to an audiovisual content, it is performed manually, by identifying each of the elements to be shown and establishing a potential time mark for the beginning and the end of the broadcast, as well as the additional information or metadata to be shown.

In the state of the art are known the following documents:
- US2011113444 which discloses a system for indexing physical objects, locations and people, collectively referred to as video objects, which appear in videos. The system enables video object-level identification of TV and video content, and makes those video objects indexable, linkable, and searchable.

US2007250901 a method and apparatus for annotating media streams. In one embodiment the method facilitates creation of an annotated media stream by a user including receiving the media stream from the user, mapping at least one item of supplemental content to at least a portion of the media stream to produce the annotated media stream, and storing the annotated media stream. In another embodiment, the method distributes an annotated media stream provided by a user including receiving the annotated media stream from the user,

Therefore, the object of the present invention is to develop a process for obtaining, in a quick, semi-automatic, scalable manner, a database formed by a set of files and time spans, i.e. relevant data (about actors, characters, interesting facts, attire, music, places, objects, etc.) related to various audiovisual contents (films, television series, documentaries, music videos, etc.) and the time intervals of interest, which are obviously dependent upon, and different for, each of the different contents, with the following characteristics that make it unique:

### DESCRIPTION OF THE INVENTION

The object of the present invention is a process for assigning metadata to an audiovisual content through different time references, which comprises the following steps:
- **Optimal rearrangement of the audiovisual content into sub-scenes:** In its original format, an audiovisual content may be seen as a succession of scenes, shots, or even frames arranged in such a way that it narrates a story or, more generally, arranged in the way that they are to be consumed by the spectators. This arrangement may not be the optimal one when the audiovisual content is intended to serve as input for different automatic processes; for example, for the automatic identification of objects onscreen, it is much more efficient to cluster the same shots of a scene together, even if they are not consecutive in time. For this reason, the first step of this process involves a rearrangement of the sub-scenes based on similarity metrics between images and the detection of sudden changes in those similarities.
- **Identification of elements in each of the sub-scenes and temporal and informational annotation thereof:** The input elements used in this part of the process are the previously rearranged audiovisual content and a database with relevant information automatically obtained from the Internet on the basis of different categories (descriptions of objects, photographs of places, technical data about vehicles, awards obtained by the films, etc.), such that all the coincidences located are semi-automatically proposed to the person directing the process.
   Two very important data that are added to the elements during this part of the process are:
   - on the one hand, the time span, or time mark with respect to the original arrangement of the audiovisual content, which indicates the exact moment when each piece of information is identified onscreen and ceases to be visible onscreen; this operation is performed automatically;
   - and, on the other hand, the different relations (coincidence, content or container, place, belonging, kinship, relation by sharing a third element, etc.) between the different elements or different pieces of information; this action is performed semi-automatically.
- **Search for commercial matches for the elements identified:** Similarly to the search for additional information about all the elements identified in the content, the next step of the process uses the information identified to that moment in order to search for commercial matches.
   Commercial matches are searched in a database made up of all the catalogues available thanks to agreements with different types of shops and distributors. Unlike informational searches, wherein it is necessary to find exact matches, in commercial searches it is interesting to find, in addition to such exact coincidences, similar coincidences or coincidences with objects that may be commercially interesting to the consumers of the content, even if they are not exactly the same; for example, a similar garment, another music album by the same artist being heard, another film with the same actor, etc.
   The search for commercial matches is performed on the basis of different types of subjects, for example, persons, settings, music, vehicles, historical context, and clothing, such that, when a type of subject is located using different automatic recognition computer means, it is possible to identify the name of the actor, the vehicle make, the music being played, etc., in order to load the additional information onto the elements of the sub-scenes in the database; this information may be automatically retrieved from pre-assigned websites or from a previously created database designed to grant a uniform content to all the audiovisual contents with the same elements.
   The information related to an element is called a file. A file contains different types of information related to the element that defines it. It will have a title, and may include photographs of the element, descriptive text or definitions thereof, tables with characteristics or data, commercial contents that may be of interest to a person interested in said element, maps of places, links to sites of interest, etc.
- **Expert deduplication, annotation and editing:** Once the content has been efficiently rearranged and semi-automatically annotated with enriched information, the relations between the pieces of information have been identified and commercial matches have been found, all the accumulated information is reviewed by an expert. The experts review the pieces of information related to their field of knowledge and may de-duplicate or prevent a piece of information from being identified several times when it is really the same, as well as correct those aspects that have not been automatically identified in a completely correct manner, and add or explain in more depth those contents which they decide. This final part makes it possible to obtain a database with a unique level of detail and quality without significantly increasing the total duration of the process.

Except as otherwise specified, all the technical and scientific elements used in the present specification have the meaning that is habitually understood by normal persons skilled in the art where to this invention belongs. In the implementation of the present invention, similar or equivalent processes and materials to those described in the specification may be used.

Throughout the description and the claims, the word "comprises" and variants thereof are not intended to exclude other technical characteristics, additives, components or steps. For persons skilled in the art, other objects, advantages and characteristics of the invention will arise, partly from the description and partly from the implementation of the invention.

### DESCRIPTION OF THE FIGURES

In order to supplement the description being made, and to contribute to a better understanding of the characteristics of the invention, according to a preferred embodiment thereof, a set of drawings is attached to said description as an integral part thereof, where the following is represented for illustrative, non-limiting purposes:
In Figure 1, we may observe a simplified representation of an audiovisual content.
Figure 2 shows a possible database record and a possible configuration of the fields in each record.

### PREFERRED EMBODIMENT OF THE INVENTION

In light of the figures, below we describe a preferred embodiment of the proposed invention.

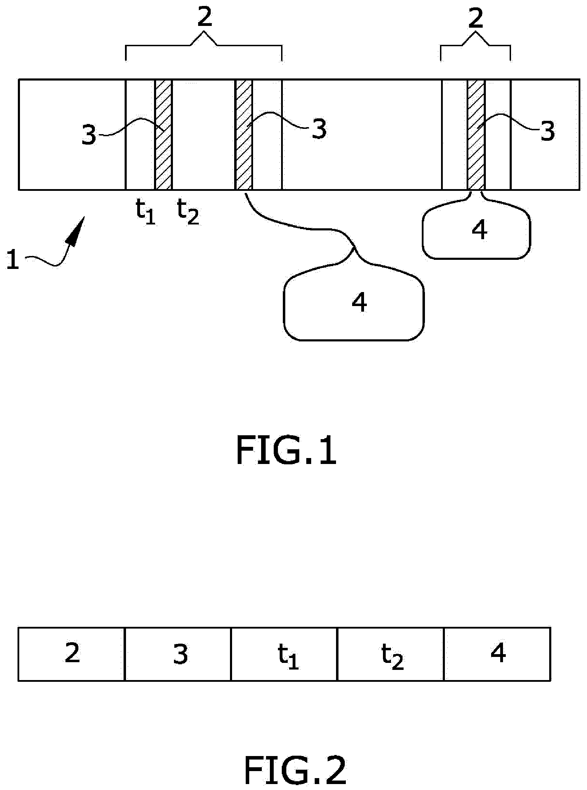

In Figure 1, we may observe a possible simplified audiovisual content (1), wherein the sub-scenes have been selected (2), the elements (3) have been subsequently identified, each of the elements (3) having a time mark for the beginning of the broadcast (t1) and another time mark for the end of the broadcast (t2), and an information file (4) has been assigned to each element related to the element that defines it. It will have a title, and may include photographs of the element, descriptive text or definitions thereof, tables with characteristics or data, commercial contents that may be of interest to a person interested in said element, maps of places, and links to sites of interest.

The techniques used for the automatic separation of the audiovisual content into sub-scenes on the basis of the succession of scenes, shots or even frames, comprises two parts:
- The first part involves a separation of shots which detects sudden changes in the images that will be considered to be changes of shot. To this end, several histograms are compared block by block.
- The second part entails separation into scenes and identifies those extracted shots which, due to their similarity, may be considered to belong to the same scene or, at least, it may be considered a good idea to make them interactive in order to make the most of the work. In order to do so, the initial and the final moment of each shot identified are clustered together.

The identification of elements in each of the sub-scenes is performed on the basis of different categories, or types of files, which, in a potential, non-limiting embodiment, may be: Men, women, children, creatures and robots, fashion, transport, food and drink, household, technology, sports and leisure, health and beauty, fauna and flora, weapons, art, business, place, time, action, music, references, trivia, miscellanea, quotations, architecture, etc.

In order to recognise each particular element within each category, different techniques are used.

In the case of the automatic recognition of actors, the process is divided into two phases:
- The first is face detection throughout all the frames of the film. To this end, a complex algorithm is used which combines various methods, such as oriented gradients, in order to locate certain shapes; image pyramids, in order to find those shapes at different scales; spatial sweeping, in order to find them at different places; and a final binary decision-making based on support vector machines. Since this method may be less accurate for certain frames wherein the faces are covered or turned, a tracking of the objects detected as faces and a clustering of their trajectories are added, which helps to find them even under the most difficult conditions.
- The second part entails the specific identification of actors. To this end, a convolutional neural network model is trained which has a scoring process that is highly parallelisable.

Thus, the database obtained will contain a number of records, where each record will have the following fields, as shown in Figure 2.
- Sub-scene (2)
- Element (3)
- Time mark for the beginning of the broadcast (t1)
- Time mark for the end of the broadcast (t2)
- Afile

Each file may further contain a number of fields, such as, for example, title, photographs, description, data tables, commercial contents, etc.

Having sufficiently described the nature of the present invention, as well as the way to implement it, we state that, within its essentiality, it may be implemented in other embodiments that may differ in some details from the one described as an example, and which will equally receive the protection being requested, provided that they fall within the scope of the appended claims.

## Claims

1. Process for generating a database linked to an audiovisual content through different time references, **characterised in that** it comprises the following steps:
- rearrangement of the audiovisual content (1) into sub-scenes (2), on the basis of the succession of scenes, shots frames, which comprises two parts:
- The first part involves a separation of shots, which detects sudden changes in the images,
- The second part entails a separation into scenes and identifies those extracted shots that, because they are very similar, may be considered to belong to the same scene,
- identification of elements (3) in each of the sub-scenes (2), which uses, as input elements (3), the previously rearranged audiovisual content (1) and a database with relevant information automatically obtained from the Internet on the basis of different categories, the following being performed for each of the elements (3):
∘ a temporal and informational annotation thereof, wherein the temporal annotation indicates the exact moment when each piece of information is identified onscreen and ceases to be visible onscreen, on the basis of the original arrangement of the audiovisual content (1);
∘ an informational annotation of the different relations (coincidence, content or container, place, belonging, kinship, relation by sharing a third element, etc.) between the different elements (3),
- search for commercial matches in the elements (3) identified,
- expert deduplication, annotation and editing,
wherein the different categories on the basis of which the elements (3) of each of the sub-scenes (2) are identified are: Men, women, characters, actors, children, creatures and robots, fashion, transport, food and drink, household, technology, sports and leisure, health and beauty, fauna and flora, weapons, art, business, place, time, action, music, references, trivia, miscellanea, quotations, architecture,
**characterized in that**
the process for the automatic recognition of actors is divided into two phases:
- the first phase is a face detection throughout all the frames in the audiovisual content, by using, a complex algorithm which combines; oriented gradients, in order to locate certain shapes; image pyramids, in order to find those shapes at different scales; spatial sweeping, in order to find them at different places; and a final binary decision-making based on support vector machines; a tracking of the objects detected as faces and a clustering of their trajectories are added,
- the second phase entails the specific identification of actors, by training a convolutional neural network model which has a scoring process that is highly parallelisable.

2. Process for generating a database linked to an audiovisual content through different time references according to claim 1, wherein the separation of shots that detects sudden changes in the images is performed by comparing several histograms block by block.

## Patentansprüche

1. Verfahren zur Erzeugung einer Datenbank mit verlinkten daten zu verschiedenen Zeitverweisen auf audiovisuellen Inhalt, **dadurch gekennzeichnet, dass** sie die folgenden Schritte umfasst:
- Umordnung des audiovisuellen Inhalts (1) in Teilszenen (2) auf Basis der Abfolge von Szenen, Aufnahmen, Einzelbildern, die zwei Teile umfasst:
- Der erste Teil schließt eine Trennung von Aufnahmen ein, die plötzliche Änderungen in den Bildern erkennt,
- Der zweite Teil beinhaltet eine Trennung in Szenen und identifiziert jene extrahierten Aufnahmen, die aufgrund ihrer großen Ähnlichkeit als derselben Szene zugehörig erachtet werden können,
- Identifizierung von Elementen (3) in jeder der Teilszenen (2), die als Eingabeelemente (3) den zuvor umgeordneten audiovisuellen Inhalt (1) und eine Datenbank mit relevanten Informationen verwendet, die auf Basis verschiedener Kategorien automatisch aus dem Internet erhalten wurden, wobei für jedes der Elemente (3) Folgendes vorgenommen wird:
∘ eine Zeit- und Informationsbeschriftung dazu, wobei die Zeitbeschriftung den genauen Moment, in dem die jeweilige Information auf dem Bildschirm identifiziert wird, und jenen, in dem sie nicht mehr auf dem Bildschirm sichtbar ist, auf Basis der ursprünglichen Anordnung des audiovisuellen Inhalts (1) angibt;
∘ eine Informationsbeschriftung zu den verschiedenen Beziehungen (Zufall, Inhalt oder Behälter, Ort, Zugehörigkeit, Verwandtschaft, Beziehung durch ein gemeinsames Drittelement usw.) zwischen den verschiedenen Elementen (3),
- Suche nach handelsüblichen Übereinstimmungen in den identifizierten Elementen (3),
- sachkundige Deduplizierung, Beschriftung und Bearbeitung,
wobei die verschiedenen Kategorien, auf deren Basis die Elemente (3) jeder der Teilszenen (2) identifiziert werden, lauten: Männer, Frauen, Rollen, Schauspieler, Kinder, Kreaturen und Roboter, Mode, Verkehr, Nahrungsmittel, Haushalt, Technik, Sport und Freizeit, Gesundheit und Kosmetik, Tiere und Pflanzen, Waffen, Kunst, Wirtschaft, Ort, Zeit, Handlung, Musik, Verweise, Nebensächliches, Diverses, Zitate, Architektur, **dadurch gekennzeichnet, dass**
das Verfahren zur automatischen Erkennung von Schauspielern in zwei Phasen unterteilt ist:
- die erste Phase ist eine Gesichtserkennung über sämtliche Einzelbilder in dem audiovisuellen Inhalt durch Verwenden eines komplexen Algorithmus, der Folgendes vereint: orientierte Gradienten, um bestimmte Formen zu orten; Bildpyramiden, um diese Formen in verschiedenen Maßstäben zu finden; räumliches Durchsuchen, um sie an verschiedenen Orten zu finden; und das Treffen einer abschließenden binären Entscheidung basierend auf Support Vector Machines; ein Verfolgen der als Gesichter erkannten Objekte und ein Clustern von deren Bewegungsabläufen werden hinzugefügt;
- die zweite Phase beinhaltet die konkrete Identifizierung von Schauspielern durch Üben eines Convolutional-Neural-Network-Modells, das ein in hohem Maße parallelisierbares Bewertungsverfahren aufweist.

2. Verfahren zur Erzeugung einer Datenbankmit verlinkten daten zu verschiedenen Zeitverweisen auf audiovisuellen Inhalt, nach Anspruch 1, wobei die Trennung von Aufnahmen, die plötzliche Änderungen in den Bildern erkennt, durch Vergleichen mehrerer Histogramme einen Block nach dem anderen vorgenommen wird.

## Revendications

1. Procédé de génération d'une base de données reliées avec différentes références temporelles à un contenu audiovisuel, caractérisé parce qu'il comprend les étapes suivantes :
- réarrangement du contenu audiovisuel (1) en sous-scènes (2), sur la base de la succession de scènes, photogrammes de plans, qui comprend deux parties :
- La première partie implique une séparation de plans, qui détecte des changements soudains dans les images,
- La seconde partie suppose une séparation en scènes et identifie les plans extraits qui, parce qu'ils sont très similaires, peuvent être considérés comme appartenant à la même scène,
- identification d'éléments (3) dans chacune des sous-scènes (2), qui utilise, comme éléments d'entrée (3), le contenu audiovisuel (1) préalablement réarrangé et une base de données avec des informations pertinentes obtenues automatiquement à partir d'Internet sur la base de différentes catégories, ce qui suit étant réalisé pour chacun des éléments (3) :
∘ une annotation temporelle et informationnelle de ces derniers, dans laquelle l'annotation temporelle indique le moment exact où chaque information est identifiée à l'écran et cesse d'être visible à l'écran, sur la base de l'arrangement d'origine du contenu audiovisuel (1) ;
∘ une annotation informationnelle des différents liens (coïncidence, contenu ou contenant, place, appartenance, parenté, lien par le partage d'un troisième élément, etc.) entre les différents éléments (3),
- recherche de correspondances commerciales dans les éléments (3) identifiés,
- déduplication, annotation et mise en forme d'expert,
dans lequel les différentes catégories sur la base desquelles les éléments (3) de chacune des sous-scènes (2) sont identifiés sont : Hommes, femmes, personnages, acteurs, enfants, créatures et robots, mode, transport, aliments et boissons, ménage, technologie, sports et loisirs, santé et beauté, faune et flore, armes, art, affaires, place, temps, action, musique, références, culture générale, sujets divers, citations, architecture, **caractérisée** parce que
le procédé de reconnaissance automatique des acteurs est divisé en deux phases :
- la première phase est une détection de visage dans tous les photogrammes dans le contenu audiovisuel, en utilisant, un algorithme complexe qui associe des gradients orientés, afin de localiser certaines formes ; des pyramides d'images, pour trouver ces formes à différentes échelles ; un balayage spatial, afin de les trouver à différentes places ; et une prise de décision finale binaire basée sur des machines à vecteurs de support ; un pistage des objets détectés en tant que visages et un groupage de leurs trajectoires sont ajoutés,
- la seconde phase suppose l'identification spécifique d'acteurs, en formant un modèle de réseau neuronal convolutif qui possède un procédé de notation qui est hautement parallélisable.

2. Procédé de génération d'une base de données reliées avec différentes références temporelles à un contenu audiovisuel selon la revendication 1, dans lequel la séparation de plans qui détecte des changements soudains dans les images est réalisée en comparant plusieurs histogrammes blocs par blocs.
